# EUROPEAN PATENT APPLICATION

(11) **EP 2 166 502 A1**
(43) Date of publication of application: **24.03.2010**
(21) Application number: 09011460.4
(22) Date of filing: 07.09.2009
(51) Int. Cl.: G06Q 30/00

(54) **Tariff management test automation**

(30) Priority: 05.09.2008 MY 0803433
(71) Applicant: ACCENTURE Global Services GmbH, 8200 Schaffhausen (CH)
(72) Inventor: Adrian Envin How, 52200 Kuala Lumpur (MY); Jasmine Mei Ping Kua, 47810 Petaling Jaya, Selangor (MY); Kin Yip Lau, Taman Maluri, Cheras, KL (MY); Ming Hon Wong, 55100 Kuala Lumpur (MY)
(74) Representative: Müller-Boré & Partner Patentanwälte

(57) **Abstract**

A method for an operator to test tariff and/or billing configurations using a computer based system, the method being effected by a user interface, said method including the steps of creating through said computer based system one or more accounts from a selection of a first set of options by the operator from the user interface, allocating a service or services to each account from a selection of a second set of options by the operator from the user interface said allocated services being assigned to said accounts by said computer based system, adding at least one package or component to each account from a selection of a third set of options by the operator from the user interface said packages or components services being assigned to said accounts by said computer based system, associating at least one usage file to each account from a selection of a fourth set of options by the operator from the user interface said usage files being assigned to said accounts by said computer based system thereby providing bulk test data; and simulating operation of the accounts with said bulk test data using said computer based system to provide the operator with information on the cost of the usage defined in the at least one usage file according to the services and component and/or package associated with said accounts which define the tariff and/or billing configuration.

## Description

### FIELD OF THE INVENTION

The present invention relates to a system and method, in particular a computer implemented method, of testing data relating to products and/or services. The invention is particularly useful for testing configuration data relating to proposed tariff and/or billing plans for products and/or services for a telecommunication service provider thus allowing the creation and execution of test data with respect to proposed tariff and/or billing plans.

### BACKGROUND OF THE INVENTION

The telecommunications industry is highly competitive and this has resulted generally from regulatory changes in most countries around the world seeking to deregulate the provision of telecommunication services. As the reform of the telecommunication services industries has evolved, consumers have been provided with an increasing number of products and services at a lower cost.

At the present time, the telecommunications industry worldwide is facing four major trends. Firstly, changing consumer requirements are evolving towards more personalized on-demand content and services. In the past, highly regulated telecommunications industries provided relatively few alternatives with respect to the packaging of products and/or services and consumers were required to select the most appropriate products and/or services from the relatively few offerings. However, with deregulation, the number of products and/or services has increased dramatically and consumers are displaying an increasing preference to group products and/or services according to their personal preferences. In this respect, the consumers preferences include both the products and/or services that the consumer requires and the preferred billing arrangements for those products and/or services.

Secondly, with the increased competition in the industry, individual telecommunication service providers are competing for the available revenue of consumers. In addition to the telecommunication service providers competing with each other, increasingly these providers are required to compete for revenue with alternative business models such as Mobile Virtual Network Operators (MVNO's).

Thirdly, the rapid pace of developments in information technology and telecommunications technology is enabling telecommunication service providers to develop a common platform for building and integrating real-time, converged IP (Internet Protocol) and legacy services. As a result, telecommunication service providers increasingly need to take advantage of the developments in information technology in order to obtain increased efficiency with respect to the delivery of their products and/or services in order to remain competitive.

Fourthly, as the reform of telecommunications industries around the world continues, present "barriers to entry" to specific consumer markets will most likely not exist in the future. For example, cell phone number portability between telecommunication service providers is being mandated in various countries around the world to prevent consumers from being "locked-in" to a particular telecommunication service provider. This particular reform will allow a consumer to change telecommunication service provider without the loss of their cell phone number. Whilst the introduction of this reform may vary from country to country, there is a clear intention in most countries with well developed telecommunications services to provide consumers with portability such that they can elect to choose a new telecommunication service provider without the loss of their cell phone number (sometimes referred to as mobile number or handset number). Presently many consumers are discouraged from selecting a new telecommunication service provider, despite a new provider's efforts to offer less costly services, as the transition will require them to abandon their old cell phone number with the consequent requirement to advise all their contacts (family, friends and business associates) of their new cell phone number.

In any event, due to constantly changing consumer trends, regulatory shifts and intense competition, there is a need to frequently introduce new and innovative bill plans and promotions and to reduce the time-to-market for these services.

In view of the aforementioned emerging trends, telecommunication service providers must take action to preserve or increase the competitiveness of their offerings.

Presently, reacting to changing consumer requirements is particularly difficult for telecommunication service providers. The generation of configurations for new tariff and/or billing plans for products and/or services presents a difficult problem as it is necessary for a telecommunications service provider to fully test a configuration for any new proposed tariff and/or billing plan before offering same to consumers. Having devised a new tariff and/or billing plan for products and/or services, it is necessary for the telecommunication service provider to deploy the proposed new plan configuration into multiple data bases. Further, having deployed newly devised configurations, it is necessary to fully test the new configurations across different accounts and service instances (for example, cell telephony, fixed line telephony and/or provision of an internet service) to ensure the configured tariffs and/or billing plans operate correctly and, if implemented, will invoice consumers accurately according to the published tariff and/or billing plan details.

Presently, the process of generating a configuration for a new tariff or billing plan, deploying and testing same is predominantly a manual process requiring operators of a high skill level. In particular, it is usual when configuring, deploying and testing a configuration for a new tariff and/or billing plan to require skilled staff to construct database scripts manually for the purpose of deploying and testing the plans. Of course, the use of highly skilled personnel performing operations manually not only increases the cost associated with the development, deployment and testing of new tariff configurations but also causes the process to require a substantial period of time in which to fully test any proposed tariff and/or billing configuration.

The problems associated with developing and deploying new tariff and/or billing configurations is further exacerbated by the extent to which steps within the process are performed manually. Despite requiring operators to have a high level of skill and understanding with respect to the information technology systems and the test environments in which new tariff and billing plan configurations are tested, the performance of operations manually gives rise to a high degree of human error which in turn delays the progress of testing a configuration for a new tariff and/or billing plan. For example, having devised a configuration for a new tariff and/or billing plan, which is usually embodied in the form of computer program code, it is generally necessary to deploy the program code representing the new tariff and/or billing across all active data bases in a telecommunications system in order to maintain consistency with the existing configuration in the production environment. Generally, a telecommunications service provider will have established several environments for performing necessary functions such as a reporting environment, a testing environment and a back up environment for disaster recovery.

For some systems it can be necessary to generate, deploy and test a configuration for a new tariff and/or billing plan which is configured across more than twenty (20) database tables the database table being in different databases and the databases being on different platforms. In testing such a system, the operator(s) would require an in-depth knowledge of databases, including tables and their relationships.

As the timeframe for generation, deployment and testing of a configuration for a tariff and/or billing plan can span several weeks, any such failures can be both time consuming and costly.

Having devised a new tariff or billing plan, it is necessary to test the new configuration for the plan in a test environment before implementing same in a production environment. When operating within the test environment, deploying the computer program code to effect a configuration for a new tariff or billing plan generally requires an operator to deploy the computer program code to individual data bases in the test environment in a particular order to avoid errors. Further, these functions are generally performed by an operator executing detailed instructions from a UNIX server and hand keying text commands in order to execute the computer program code in the respective databases. Of course, such activities necessarily incur a degree of human error particularly in relation to ensuring that computer program code representing the new tariff or configuration plan is executed in the correct order and in relation to the correct databases.

Accordingly, in view of the previously mentioned emerging market trends there is a need for telecommunication service providers to reduce the time required to configure, deploy and test configurations for new tariff plans in order to facilitate the implementation of new tariff or billing arrangements. In turn, any improvement to the efficiency of this process will facilitate the attraction of new and/or existing consumers to a newly devised tariff or billing plan.

Testing is an essential phase before rolling out any new configurations of new bill plans or products. The testing process often requires an exhaustive array of test criteria to ensure all areas related to a new tariff and/or billing plan or product launch have been covered. Currently, testers are required to carry out tests based on supplied test criteria and in order to perform these tests, the testers need to create test data for execution in the test environment.

Test data for functions such as accounts, services, packages and components are required to be created by the tester. Currently, testers generally use the available Customer Relationship Management (CRM) software of which the well known CustomerCentre is typical. CustomerCentre is the same application that customer service representatives use over the counter in service centres to create and maintain customer accounts. However, the test data creation process is often the longest process in the entire flow of testing and use of a CRM software application such as CustomerCentre represents a significant delay as it can only create one account, service, add package(s) and component(s) at any one time. The process of creating an account with service and packages/components typically takes an average of 5 minutes. To create multiple sets of accounts and services with packages/components using a CRM application such as CustomerCentre would require the process to be repeated i.e. 100 accounts = 100 x 5 minutes = 500 minutes.

Upon creating test data, the testers can verify that tariff and/or billing plans and products provisioned to an account are displayed correctly via CustomerCentre. Certain transactions such as change of bill plans, service transfer, etc can be performed on these test accounts to ensure that the newly configured tariff and/or billing plans and promotions are working as expected.

Another aspect of testing is to ensure that usages are rated and processed accurately and that bills can be generated for these accounts without errors.

Usage files contain call records which are not rated (i.e. no dollar amount is associated with any of the calls). A significant component of testing a tariff and/or billing plan is to ensure that calls made by the account which is provisioned to a particular bill plan is rated based on the bill plans configured rates e.g. a bill plan may define a 1 min local call as 30c hence one would expect to see 30c for every minute of local call made for an account with this bill plan. Billing plan configuration is generally a difficult task as the rating engine is very complicated and there can be many permutations to rating a call (e.g. if off peak and non adjacent call and <30 seconds and is made to favourite 5 numbers, then amount = $x)

Currently, usage files are created by the testers manually. The end product is typically a flat text file having a complex file format convention in which to store details of call records. This manual way of creating a usage file is highly prone to human error and hence requires a lot of time as testers seek to minimise errors.

Once usage files are created, they are stored in a specific directory in the server. To execute usage processing, a tester must key in a text based command from a UNIX server to initiate the process. The usage file is then identified and processed, rated, and the rated call records are written to the database.

The bill generation process is similar to usage processing. In order to generate bills, the tester keys in a text based command from the UNIX server to initiate the process.

Accordingly, in the context of the overall requirements there is a specific need to reduce the time presently required to test new tariff and/or billing configurations.

The reference to any prior art in this specification is not, and should not be taken as, an acknowledgement or any form or suggestion that the prior art forms part of the common general knowledge to those skilled in the relevant field of technology at the priority date of the claims herein.

### SUMMARY OF THE INVENTION

In one aspect, the present invention provides a method, in particular a computer implemented method, for an operator to test a tariff and/or billing configuration for a tariff and/or billing plan using a computer based system, the method being effected by a user interface, said method including the steps of :
creating through said computer based system one or more accounts from a selection of a first set of options by the operator from the user interface;
allocating a service or services to each account from a selection of a second set of options by the operator from the user interface said allocated services being assigned to said accounts by said computer based system;
adding at least one package or component to each account from a selection of a third set of options by the operator from the user interface said packages or components being assigned to said accounts by said computer based system;
associating at least one usage file to each account from a selection of a fourth set of options by the operator from the user interface said usage files being assigned to said accounts by said computer based system thereby providing bulk test data; and
simulating operation of the accounts with said bulk test data using said computer based system to provide the operator with information regarding cost of the usage defined in the at least one usage file according to the services and component and/or package associated with said accounts which define the tariff and/or billing configuration.

In another aspect the present invention provides a method, in particular a computer implemented method, for an operator to test a tariff and/or billing configuration for a tariff and/or billing plan, using a computer based system, the method being effected by a user interface, said method including the steps of :
creating through said computer based system one or more accounts from a selection of options offered to the operator from the user interface with selected services, packages and/or components;
adding at least one usage file to each account from a selection of a set of options by the operator from the user interface said usage files being assigned to said accounts by said computer based system to provide bulk test data; and
simulating operation of the accounts with said bulk test data using said computer based system to provide the operator with information regarding cost of the usage defined in the at least one usage file according to the selected services, packages and/or components associated with said accounts which define the tariff and/or billing configuration.

In a further aspect, the present invention provides a computer based system for testing tariff and/or billing configurations the system including a user interface means and operable to execute computer instruction code segments, the system including:
a first segment for creating and storing one or more accounts from a selection of a first set of options;
a second segment for allocating a service or services to each account from a second set of options;
a third segment for adding at least one package or component to each account from a selection of a third set of options;
a fourth segment for adding at least one usage file to each account from a selection of a fourth set of options, the usage files providing bulk test data; and
a fifth segment for simulating the operation of the accounts with said bulk test data and reporting the cost for the usage defined in the at least one usage file according to the services and component and/or packages associated with said accounts which define the tariff and/or billing configuration.

In yet a further aspect, the present invention provides a computer based system for testing a tariff and/or billing configuration for a tariff and/or billing plans the system including a user interface means and operable to execute computer instruction code segments, the system including:
a first segment for creating one or more accounts from a selection of options presented in the user interface, the accounts having services, packages and/or components associated therewith;
a second segment for adding at least one usage file to each account from a selection of a set of options from the user interface the usage files collectively representing bulk test data; and
a third segment for simulating the operation of the accounts with said bulk test data and generating a report of the cost of the usage defined in the at least one usage file according to the selected services, packages and/or components which define the tariff and/or billing configuration.

Advantageously, there is provided an improved man machine interaction, wherein in particular due to individual method steps of the computer implemented method, the user is in a position to process data in a simple and efficient manner. As an example, the simulation may allow that data may be processed and provided to the user in a faster manner. Moreover, due to the simulation, it may be possible that extensive and resource consuming testing of real life accounts may be avoided. In addition, as a further example, it was found that by combination of the bulk test data and the simulation using the bulk test data advanced data processing is provided, that conventionally would not be possible. Hence, by the method according to the present application, the user may be relieved from the mental task to carry the operations of a number of individually configured accounts.

Usage files may be selected from a set of default usage files. Such files may represent standard usage patterns that are required for all tests. Alternatively, usage files may be created by an operator for the purpose of including relevant usage scenarios that will test the particular tariff and/or billing configuration.

In an embodiment, the creation of a custom usage file is effected by use of the user interface. In particular, an operator may select from many options in the user interface and include usage data required by the operator to test particular aspects of the proposed tariff and/or billing configuration under consideration. In this embodiment, the operator may create a custom usage file without requiring any knowledge or skill in relation to understanding the format of particular usage files. Having selected the various parameters of usage from the user interface, the computer based system creates the appropriately formatted file for the particular test system. Hence, an improved man machine interface is provided.

Having created accounts, allocated services thereto, added packages and/or components to the accounts and associated usage files, the operation of the accounts is simulated on the test system. This provides the operator with an indication of the cost that would be incurred in each account in the event that the usage as defined in the usage files were to occur. In one embodiment, the reported costs are compared with the known cost that should arise from the usage for a particular tariff and/or billing configuration thereby enabling the validation of the configuration. In the event that the reported cost is the same as the cost that should result from the usage according to the usage file, the configuration is validated. Alternatively, in the event that the reported cost differs, then an error or conflict has occurred and operators may then attempt to locate the source of the error or conflict.

The user interface may be provided in the form of a graphical user interface with the various objects such as accounts, services, packages and/or components represented as graphical objects. In one embodiment, operators may allocate services to accounts by selecting the object representing a service and "dragging and dropping" the graphical object representing the service over the graphical object representing one or more accounts. Other associations and or assignments between objects may be similarly effected. Hence, the user is provided with an improved display of information and also with the possibility of an improved processing of data.

In another embodiment, the user interface is implemented by the use of a tabbed menu arrangement.

The techniques described herein may be embodied by stored, executable instructions that are executed by one or more suitable processing devices such as personal or server computers. The executable instructions may result in computer instructions that are implemented integrally to a computer or over a network using separate software segments. The executable instructions may also include segments of existing software that effect functions in cooperation with dedicated segments of computer instruction code developed specifically for the present invention.

In an exemplary embodiment, the interface with an operator is a web-enabled interface that is implemented on a device connected to a data communications network such as the internet.

According to another aspect, a computer program product is provided. The computer program product may comprise computer-readable instructions which may be stored on a computer-readable medium or provided as a data signal, such that when the instructions are loaded and executed on a device the instructions cause the device to perform operations according to the method of any one of the preceding claims.

### BRIEF DESCRIPTION OF THE DRAWINGS

One or more embodiments of the present invention are described below with reference to the accompanying figures in which:
Figure 1 is a block diagram detailing the conceptual layers of a proposed solution architecture according to one embodiment of the invention; and
Figure 2 is a flow chart providing a greater level of detail with respect to the individual steps involved in the testing of a newly configured tariff plan.

### DESCRIPTION OF EMBODIMENTS OF THE INVENTION

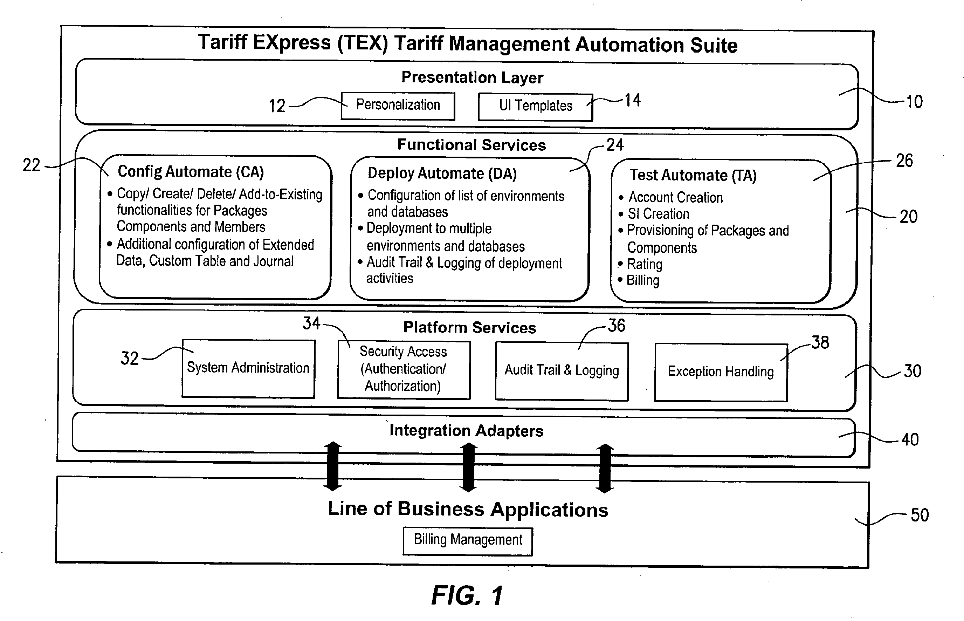

With reference to Figure 1, a block diagram detailing the conceptual layers of a proposed solution architecture is provided. In this solution architecture, the primary conceptual layers include a presentation layer (10), a functional services layer (20), a platform services layer (30) and an integration adapters layer (40). The tariff management automation suite including these layers interfaces with a range of existing business applications (50).

The presentation layer (10) includes a personalization application (12) and user interface (UI) templates (14).

The functional services layer (20) includes software for performing the functions of Configuration Automation (22), Deployment Automation (24) and Test Automation (26). The user interface templates (14) and personalization application (12) provided in the presentation layer (10) interface with each of the automation functional services (22, 24 and 26) as defined in the functional services layer (20) thus affording operators a consistent user interface experience when invoking functions from any of the automation components in the functional services layer (20).

The tariff management automation suite as depicted in Figure 1 also includes a platform services layer (30) which includes system administration components (32), a security access component (34), audit trail and logging component (36) and an exception handling component (38).

Software components residing in the integration adapters layer (40) enable the functional components of the tariff management automation suite to interface with existing business applications of the telecommunications service provider. As an example, in Figure 1, the business applications layer (50) includes a functional software component (52) in the form of a billing management software program.

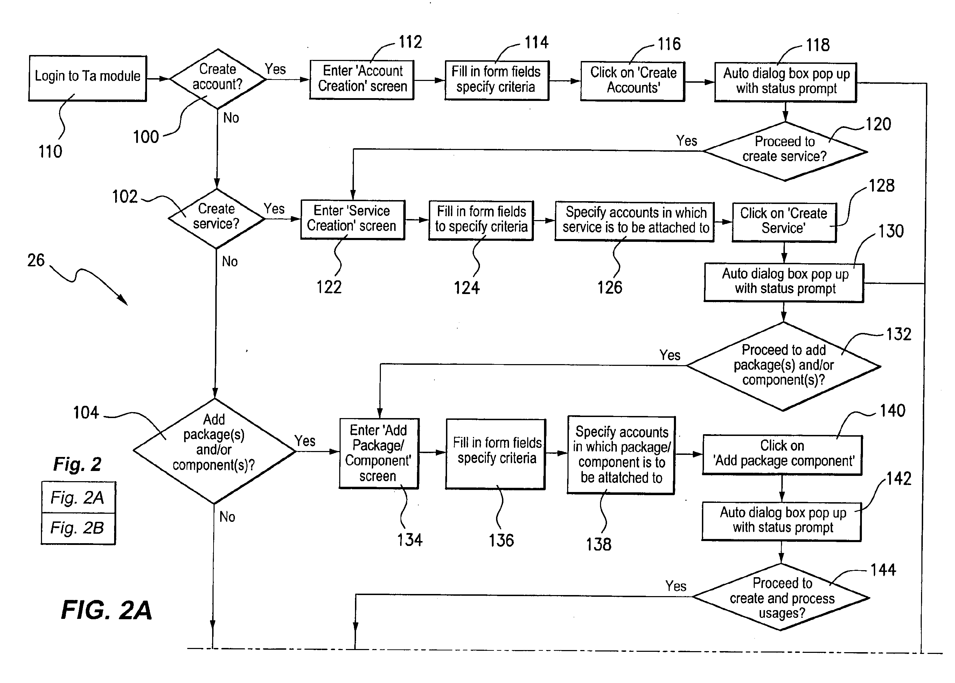

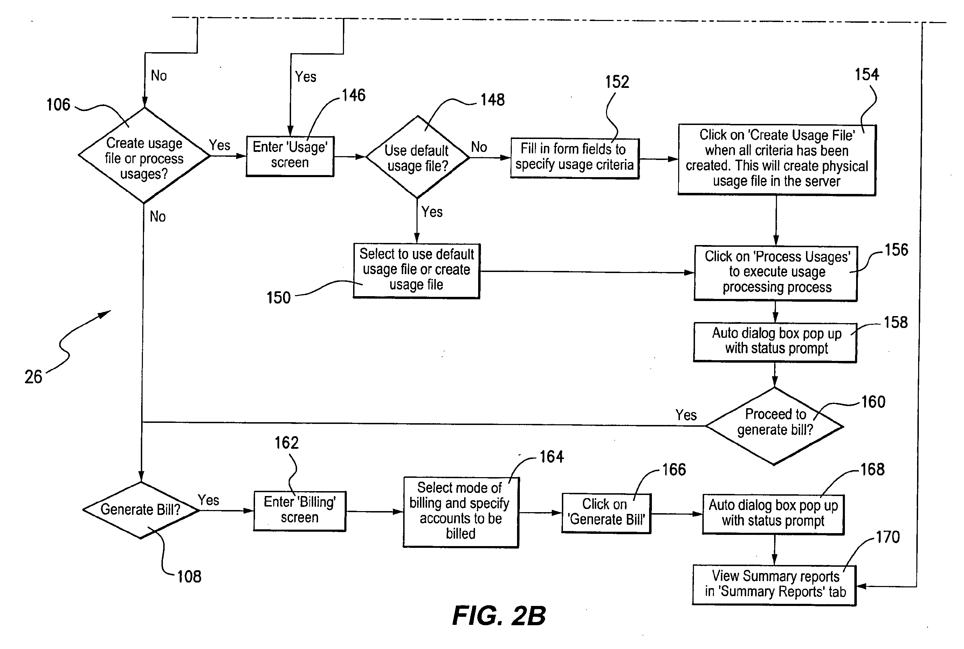

Figure 2 provides a summary level flow chart of the primary steps involved in the testing of proposed tariff and/or billing configurations depicted as test automation (26) in Figure 1. The flow chart does not illustrate the operational aspects which are generally effected by relational data bases that are managed by the execution of SQL (Structured Query Language) scripts. These scripts perform actions such as inserting, updating and/or deleting entries from data bases. In addition to these basic functions, scripts can be used to perform complex logical functions such as searching and sorting.

The test automation flow chart depicts a graphical user interface (GUI) browser based front end and presents a "tabbed" interface to the user. Each tab represents a working module and contains a form which requires completion by the user. The form will allow data to be inserted directly or by invoking "drop down boxes". There are five (5) tabs which include the following tabs in order: Account creation (100), Service creation (102), Add Package/component (104), Usage (106) and Billing (108).

The first module 100 will now be described. All modules require a user to logon onto the system. At 110 a user enters their name and password to open the test automation system. Account creation (100) allows the user to create test accounts in bulk mode. The user can create accounts with a particular set of attributes. At step (112) the "Account Creation" screen is opened to initiate the process. The user will need to know the types of accounts to be created and the number of accounts. In contrast to the prior art, the user is not limited to the creation of one account but can create a number of accounts simultaneously. The form to select the criteria for the accounts is completed at step (114). Once the criteria for the accounts are completed then the accounts are created at step (116) by accessing the various databases. The selected number of accounts is created with the set of attributes which have been selected. Each account will contain name and address details together with billing cycle period, market code, discounts, etc. The accounts generated would be tested at step (118) for any errors and confirmation is provided that the accounts should be saved. Once complete, this module will allow access through step (120) to the service creation module (102) and is directed to the enter "Service Creation" screen at step (122).

The service creation module (102) allows the user to attach a service, or multiple services, to one or more accounts. Services are predefined and could be mobile, fixed line or ISP. At step (122) the "Service Creation" screen is opened to initiate this process. In contrast to the prior art, the user is not limited to the creation of one service at a time for a single account. A form is completed at step (124). The form would include selections for mobile, fixed line and ISP services which can be attached to one or more accounts as required. Drop down choices and range boxes would be able to assist in this selection together with "drag and drop" options at step 126. Once the selections have been made each account is populated with the defined service or services at step (128). Validation for each account occurs at step (130). Once complete, this module will allow access through step (132) to the add package/component module (104) and is directed to the Enter "Add Package/Component" Screen at step (134).

The add package/component module (104) allows the user to add packages or components to accounts and services. The packages or components are predefined. Packages could include data, special promotions, 3G, etc. Components may include call waiting, SMS, WAP, international roaming, etc. At step (134) the "Add Package/Component" screen is opened to initiate this process. In contrast to the prior art, the user is not limited to the creation of one component or package at a time to a single account. A form is opened at step (136). The form at step (138) allows the components or packages to be associated with multiple accounts as required. Once the selections have been made, each account is populated with the defined components or packages at step (140). Validation for each account occurs at step (142). Once complete, this module will allow access through step (144) to the usage module (106) and is directed to the Enter "Usage" Screen at step (146).

The usage module (106) allows the user to process default usage files or to create custom usage files to generate call transactions for an account or multiple accounts. At step (146) the "Usage" screen is opened to initiate this process. In contrast to the prior art, the user does not need to know the construction of a usage file nor does he need to spend time creating one. Analysis of the file format or validation of the usage file is not required. The user at step (148) has the option of selecting one or more predefined default usage files or can create a custom usage file. If a default usage file or files is required, then the user will proceed to step (150) where the selection is made from the predefined default usage files. If a default usage file or files is not applicable, then the user completes the fields on the form at step (152) to specify the usage criteria required. Once the criteria has been selected, step (154) will generate the required custom usage files which will be stored on the server. Custom usage files constructed by hand using prior art techniques would require highly skilled operators and would require a substantial amount of time as compared with a system generating these files. The usage files are allocated to respective accounts as required. From either step (150) or step (154) the allocated usage files are processed at step (156) to generate the costs from the usage files. Validation for each account occurs at step (158). Once complete, this module will allow access through step (160) to the billing module (108).

The billing module (108) allows the user to execute the billing process on one or more accounts to check whether the tariff and/or billing configuration would be suitable. At step (162) the "Billing" screen is opened to initiate this process. Previously, in accordance with prior art techniques, a user would be required to manually insert a list of accounts into a database table. The process would require a text based command from the UNIX command line to be executed to start the bill process. In the present embodiment, a form is completed at step (164). The form specifies the mode of billing and the accounts to be billed. The bills are then processed under step (166). Validation for each account occurs at step (168). Once validation is complete this module will produce the required bills and summary reports on the operation of the test automation (26). The results can then be analyzed to determine whether the billing plan could be rolled out and the consequences of such a roll out.

The invention is not limited to the configuration discussed in the preferred embodiment. The database implementations and tabbed user interface can be substituted by equivalents. A browser based interface is preferred for ease of use but a menu driven interface may also be used.

To assist the understanding of this invention the following terms are used in this specification.
Account: an entity in the billing system which holds all customer information including personal details and billing information.
Service: an entity attached to an account e.g. mobile, fixed line, broadband. Inventory such as phone number, SIM, IP addresses are tied to a service.
Package: the bill plan which the account subscribes to based on its service e.g. a mobile plan with $75 monthly access fee and 30 minutes of free calls.
Component: subset entity contained within a package in which a customer has the option to add to a package e.g. voicemail, call forwarding, missed call notification.
Usage: calls (e.g. local calls, IDD calls, SMS, GPRS, roaming inbound/outbound calls)
Rate: All usages are stored in the usage file with details of the transaction such as start and end time of call, origin and target location, type of call, rate period e.g. peak/off peak and other details. The billing system will process these individual records (calls) in the usage file to identify which configured rate the combination of details match and then assign it a rate i.e. the price for that call. This is the basis of usage processing - to rate the call and then to insert the record of the rated call into the database.
Bills: Generated by the system when the bill generation process is executed. The process involves a complex logic of steps taken by the system to accumulate all monthly and one time charges, as well as call amounts within the billing period (e.g. monthly, quarterly, yearly). It will then apply any discounts or credits where applicable.

It will be appreciated by persons skilled in the relevant field of technology that numerous variations and/or modifications may be made to the invention as detailed in the embodiments without departing from the spirit of the scope of the invention as broadly described. The present embodiments are, therefore, to be considered in all aspects as illustrative and not restrictive.

For the purposes of this specification and claims the terms "tariff" and "billing" should be considered to have the same meaning.

## Claims

1. A computer implemented method for an operator to test a tariff and/or billing configuration for a tariff and/or billing plan using a computer based system, the method being effected by a user interface, said method including the steps of :
creating through said computer based system one or more accounts from a selection of a first set of options by the operator from the user interface;
allocating at least one service to each account from a selection of a second set of options by the operator from the user interface said allocated services being assigned to said accounts by said computer based system;
adding at least one package or component to each account from a selection of a third set of options by the operator from the user interface said packages and/or components being assigned to said accounts by said computer based system;
associating at least one usage file to each account from a selection of a fourth set of options by the operator from the user interface said usage files being assigned to said accounts by said computer based system thereby providing bulk test data; and
simulating operation of the accounts with said bulk test data using said computer based system to provide the operator with information on the cost of the usage defined in the at least one usage file according to the services and component and/or package associated with said accounts which define the tariff and/or billing configuration.

2. A computer implemented method according to claim 1, wherein said usage files are selected from a set of default usage files.

3. A computer implemented method according to either claim 1 or claim 2, wherein said usage files are selected from a custom usage file created by said computer based system based on the operator using the fourth set of options from the user interface for one or more accounts.

4. A computer implemented method according to claim 3 wherein the custom usage file is created by an operator selecting options from the user interface to generate specific usage test data that will test known conditions in a tariff and/or billing configuration, the selection of user interface options for the creation of the custom usage file effecting instructions to the computer based system to create the usage file thereby avoiding any requirement for the operator to understand the file format of the usage file.

5. A computer implemented method according to any one of the preceding claims including the additional step of comparing the information pertaining to the cost of the usage provided by the computer based system when simulating the operation of the accounts with accurate information for the tariff and/or billing configuration thereby providing an indication of the validity of the tariff and/or billing configuration.

6. A computer implemented method for an operator to test a tariff and/or billing configuration for a tariff and/or billing plan using a computer based system, the method being effected by a user interface, said method including the steps of :
creating through said computer based system one or more accounts from a selection of options offered to the operator from the user interface with selected services, packages and/or components;
adding at least one usage file to each account from a selection of a set of options by the operator from the user interface said usage files being assigned to said accounts by said computer based system to provide bulk test data; and
simulating operation of the accounts with said bulk test data using said computer based system to provide the operator with information regarding the cost of the usage defined in the at least one usage file according to the selected services, packages and/or components associated with said accounts which define the tariff and/or billing configuration.

7. A computer implemented method according to claim 6, wherein said usage files are selected from a set of default usage files.

8. A computer implemented method according to either claim 6 or claim 7, wherein said usage files are selected from custom usage files created by said computer based system based on the operator using the set of options from the user interface for one or more accounts.

9. A computer implemented method according to any one of claims 6 to 8 wherein the custom usage file is created by an operator selecting options from the user interface to generate specific usage test data that will test known conditions in a tariff and/or billing configuration, the selection of user interface options for the creation of the custom usage file effecting instructions to the computer based system to create the usage file thereby avoiding any requirement for the operator to understand the file format of the usage file.

10. A computer implemented method according to any one of claims 6 to 9 including the additional step of comparing the information pertaining to the cost of the usage provided by the computer based system when simulating the operation of the accounts with accurate information for the tariff and/or billing configuration thereby providing an indication of the validity of the tariff and/or billing configuration.

11. A computer based system for testing a tariff and/or billing configuration for a tariff and/or billing plan the system including a user interface means and operable to execute computer instruction code segments, the system including:
a first segment for creating and storing one or more accounts from a selection of a first set of options;
a second segment for allocating at least one service to each account from a second set of options;
a third segment for adding at least one package and/or component to each account from a selection of a third set of options;
a fourth segment for adding at least one usage file to each account from a selection of a fourth set of options, the usage files providing bulk test data; and
a fifth segment for simulating the operation of the accounts with said bulk test data and reporting the cost for the usage defined in the at least one usage file according to the services and component and/or packages associated with said accounts which define the tariff and/or billing configuration.

12. A computer based system for testing a tariff and/or billing configuration for a tariff and/or billing plan the system including a user interface means and operable to execute computer instruction code segments, the system including:
a first segment for creating one or more accounts from a selection of options presented in the user interface, the accounts having services, packages and/or components associated therewith;
a second segment for adding at least one usage file to each account from a selection of a set of options from the user interface the usage files collectively representing bulk test data; and
a third segment for simulating the operation of the accounts with said bulk test data and generating a report of the cost of the usage defined in the at least one usage file according to the selected services, packages and/or components which define the tariff and/or billing configuration.

13. A computer based system according to either claim 11 or claim 12 wherein the user interface is a graphical user interface and the one or more accounts, the allocated services, the at least one package and/or component and/or the at least one usage file are represented as graphical objects.

14. A computer based system according to any one of claims 11 to 13 wherein said sets of options are selected through a tab based menu arrangement.

15. A computer based system according to any one of claims 11 to 14 including a sixth segment that enables the creation of a usage file by operation of the user interface to select parameters of usage, the use of the user interface thereby avoiding any requirement for an operator to understand the file format of a usage file.
